# EUROPÄISCHE PATENTSCHRIFT

(11) **EP 0 493 863 B1**
(45) Veröffentlichungstag und Bekanntmachung des Hinweises auf die Patenterteilung: **11.03.1998**
(21) Anmeldenummer: 91250341.4
(22) Anmeldetag: 23.12.1991
(51) Int. Cl.: G03B 35/24, G03B 21/60, G03B 21/62

(54) **Linsenrasterschirm für autostereoskopische Bildwahrnehmung**
Lenticular screen for the perception of autostereoscopic images
Ecran lenticulaire pour la perception d'images autostéréoscopiques

(30) Priorität: 30.12.1990 DE 4042313
(43) Veröffentlichungstag der Anmeldung: 08.07.1992
(73) Patentinhaber: Heinrich-Hertz-Institut für Nachrichtentechnik Berlin GmbH, 10587 Berlin (DE)
(72) Erfinder: Börner, Reinhard, Dipl.-Ing., W-1000 Berlin 15 (DE)

(56) Entgegenhaltungen:
- EP-A- 0 404 289
- DE-A- 3 700 525
- US-A- 1 867 199
- US-A- 4 013 465
- FERNSEH- UND KINO-TECHNIK Bd. 39, Nr. 8, August 1985, BERLIN Seiten 383 - 387 BOERNER '3D-BILDPROJEKTION IN LINSENRASTERSCHIRMEN'

## Beschreibung

Die Erfindung bezieht sich auf einen Linsenrasterschirm für autostereoskopische Bildwahrnehmung mit einer Schirmdicke T und vertikal verlaufenden Zylinderlinsen mit einem Krümmungsradius K und einer Pitchbreite P auf seiner Vorderseite.

Bei der Autostereoskopie können stehende oder bewegte Bilder mit mindestens einer Perspektive mittels eines Linsenrasterschirms vom Betrachter ohne weitere Hilfsmittel räumlich wahrgenommen werden. Dabei können die Bilder entweder selbst gerastert sein oder gerastert projiziert werden. Die optische Vereinigung der einzelnen Rasterstreifen für das perspektivische Sehen erfolgt durch die vertikal verlaufenden Zylinderlinsen auf der Vorderseite eines solchen Linsenrasterschirms.

Derartige Linsenrasterschirme sind beispielsweise aus der EP-A-0 404 289 und der DE-A-37 00 525 bekannt. Die Erfindung geht von dem Stand der Technik gemäß der DE-A-37 00 525 aus. Hierbei handelt es sich um einen großflächigen Projektionsschirm, auf dem Parallax-Panoramagramme mit Hilfe mehrerer Projektoren erzeugt werden. Bei der Projektion entsteht jedoch auch ein horizontales Lichtband in Höhe der Projektionsobjektive auf der Oberfläche der Zylinderlinsen des Projektionschirms. Dieses Störlichtband wird durch das von den Projektionsobjektiven abgestrahlte Licht in Form von feinen vertikalen, den Objektivdurchmessern entsprechenden Lichtstreifen auf jedem Linsenscheitel erzeugt. Es handelt sich um die Abbildungen der leuchtenden Austrittspupillen der Objektive auf der spiegelnden Oberfläche des Projektionsschirms. Je nach Anzahl der Projektoren kommt es für das Störlichtband zu einer additiven Wirkung; Helligkeit und Breite des Störlichtbands werden durch die Lichstärke und Objecktivdurchmesser der Projektoren bestimmt.

Aus der US-A-1 867 199 ist ein Projektionsschirm als Ausrüstung eines Kinosaales oder dergleichen für monoskopische Darstellungen bekannt, der konkav gekrümmt ist und dessen Vorderfront eine Grobreliefstruktur in Form von parallelen, vorzugsweise vertikal verlaufenden optischen Elementen und auf deren Oberfläche eine dazu im wesentlichen rechtwinklig verlaufende Feinreliefstruktur zur Weitwinkelprojektion aufweist. In der Grobreliefstruktur sind die optischen Elemente als Rillen ausgebildet, haben alle die gleichen Abmessungen und Konturen und begrenzen die laterale Diffusion des reflektierten Projektorlichts auf eine vorgegebene Betrachtungsbreite. Die Feinreliefstruktur wird zwar auch von Rillen, jedoch in der Art von Kratzern, Riefen oder Schrammen gebildet, die sich im wesentlichen in horizontaler Richtung erstrecken und eine Diffusion des reflektierten Projektorlichts in vertikaler Richtung bewirken. Sowohl die Grob- als auch vor allem die Feinreliefstruktur ist für Betrachter im Kinosaal nicht wahrnehmbar.

Bei Projektionsschirmen o.ä. mit vorbestimmter Verteilung des Bildlichts gemäß der DE-A-22 60 985 soll das "Nutzlicht" ebenfalls möglichst vollständig und gleichmäßig verteilt in einem vorgegebenen Betrachtungsbereich in Erscheinung treten sowie "Störlicht", das durch andere, unerwünschte Lichtquellen auftritt, so abgewiesen werden, daß es im vorgegebenen Betrachtungsfeld nicht wahrnehmbar ist. Hierzu ist die Vorderfront mit einer Vielzahl von aneinandergrenzenden, in parallelen, vertikal verlaufenden Reihen befindlichen optischen Mikroelementen versehen, die jeweils das einfallende "Nutzlicht" unter vorbestimmten vertikalen und horizontalen Feldwinkeln mit im wesentlicher gleicher Luminanz wieder verteilen. Durch die beschriebenen Mikroelemente können nur Störlichteffekte von Fremdlichtquellen aus dem Betrachtungsraum ferngehalten werden, ein Störlichtband mehrerer Projektoren, wie es bei der autostereoskopischen Parallax-Panoramagramm-Projektion auftritt, kann durch diese Mikroelemente weder ausgeblendet, noch in seiner Wirkung beeinflußt werden.

Der genannten DE-A-2 260 985 sind auch Einzelheiten zur Herstellung der optischen Mikroelemente auf der Vorderfläche eines solchen Projektionsschirms zu entnehmen. Im wesentlichen beruht das Verfahren darauf, im selben Arbeitsgang beim Schneiden einer geradlinigen Rille mit variierender Schneidtiefe abwechselnde, konkav und konvex ausgebildete Mikroelemente zu erzeugen. Der Herstellungsprozeß ist allerdings dreistufig : zuerst wird ein Positiv geschnitten und von diesem dann eine Negativmatrize abgeformt, die dann der Abformung der Positivformen dient.

In der US-A-4 114 983 wird für eine Antireflexwirkung ein optisches Element mit einer völlig unregelmäßig mikrostrukturierten Oberfläche beschrieben. Die Mikrostrukturen werden durch Ätzen hergestellt, wobei eine negative Beeinflussung der gesamten Oberfläche nicht zu vermeiden ist. Hergestellt werden die optischen Elemente durch Stempelpressen. Hierfür sind ebene Oberflächen erforderlich, da ansonsten aufwendige Justagen zur Erzielung von Deckungsgleichheit mit gekrümmten Flächen erforderlich wären.

Ebenfalls nicht geeignet, das Störlichtband beim Einsatz mehrerer Projektoren zur autostereoskopischen Bilddarstellung weitgehend zu verhindern, sind die der US-A-4 701 020 zu entnehmende "black mask" oder die der DE-A-31 41 957 zu entnehmende "Mattierungsschicht". Die dabei auftretende, unerwünschte Minderung der Intensität kann für dreidimensionale Projektionen nicht in Kauf genommen werden.

Aus der US-A-4 013 465 ist es - quasi als "Schulbeispiel einer Entspiegelung" - bekannt, Oberflächen optischer Elemente, z.B. Linsen, mit einem mikrostrukturierten Feinrelief zu versehen. Dabei werden die Voraussetzungen einer diffusen Reflexion sichtbaren Lichts dann erfüllt, wenn die Abmessungen von aneinandergrenzenden kegelstumpfartigen Vertiefungen bzw. wulstartigen Erhebungen unterhalb von 1 µm liegen, also das Feinrelief kleine Rauhigkeit besitzt. Derartige Feinreliefs lassen sich nach diesem vorbekannten Stand der Technik für ausgewählte Lichtwellenbereiche auf völlig ebenen, allenfalls schwach gekrümmten Flächen herstellen, indem regelmäßige Muster mittels konstruktiver/destruktiver Interferenzen von Lichtwellen in lichtempfindlichem Material erzeugt werden.

Das der Erfindung zugrundeliegende spezielle Problem besteht darin, das oben genannte, für den Betrachter störende Lichtband auf Linsenrasterschirmen der eingangs genannten Art weitgehend zu vermeiden. Zusätzlich soll bei der Problemlösung beachtet werden, daß sie sich einfach und damit ökonomisch in den Mitteln realisieren läßt.

Die technische Lehre gemäß der Erfindung besteht darin, daß die Zylinderlinsen auf ihrer Oberfläche eine Reliefstruktur aufweisen, bei der Reflexionsflächen mit Abmessungen, die auf eine Entfernung des Linsenrasterschirms von einem Betrachter im Betrachtungsabstand für autostereoskopische Bildwahrnehmung jenseits der Wahrnehmbarkeitsgrenze liegen, nach einem vorgesehenen, vertikal verlaufenden Muster, mit einem Versatz zwischen benachbarten Zylinderlinsen, gegen die Achsen der Zylinderlinsen derart geneigt sind, daß eine Antireflexwirkung erzielt wird.

Eine solche Reliefstruktur führt dazu, daß das Störlichtband nicht mehr als verhältnismäßig helles, schmales Lichtband erscheint, sondern aufgeweitet und größtenteils in für den Betrachter nicht sichtbare Bereiche (reguläre Reflexion an den schrägen Reflexionsflächen der Reliefstruktur) und als geringer Rest in feine Lichtpunkte (Reflexion an den Scheiteln aneinandergrenzender Reflexionsflächen der Reliefstruktur) von entsprechend geringer Intensität aufgefächert wird. Die Struktur wirkt damit störenden Lichtreflexen auf dem Linsenrasterschirm entgegen. Die Lichtintensität des noch wahrnehmbaren Störlichtbandes läßt sich dadurch auf beispielsweise 0,05% eines nicht aufgeweiteten Bandes senken. Die Störlichtband-Aufweitung führt zwar auch zu einer jedoch geringfügigen Verschleierung bzw. Kontrastminderung des Gesamtbildes, insgesamt bedeutet dies aber eine erheblich geringere Beeinträchtigung der Wiedergabequalität als durch ein schmales Störlichtband. Weiterhin werden durch die Reliefstruktur auch andere Störlichteffekte auf dem Linsenrasterschirm, beispielsweise durch weitere Lichtquellen im Betrachterraum, weitgehend vermieden. Durch die Reliefstruktur können mit einfachen Mitteln Störlichtreflexe wirksam reduziert werden. Zusätzliche Antireflexfolien o.ä., die beispielsweise vor den Linsenrasterschirm montiert werden müßten, sind weniger effektiv.

Infolge der vertikal orientierten Reliefstruktur des erfindungsgemäßen Linsenrasterschirms wird das Störlicht in Richtung des oberen und unteren Randes des Schirms gestreut. Das führt zu einer besonders günstigen vertikalen Aufweitung und Auffächerung des Störlichtbandes. Im optimalen Fall wird das Störlicht über die Gesamtfläche des Linsenrasterschirms verteilt.

Die vertikal orientierte Reliefstruktur kann jedes Muster aufweisen, das die Bedingung erfüllt, für eine optimale Störlichtreflex-Unterdrückung nur Tangentialpunkte zur gekrümmten Oberfläche jeder Zylinderlinse auf der Vorderseite des Linsenrasterschirms zu haben. Für die gezielte Berechnung und die Herstellung der vertikal orientierten Reliefstruktur aus den infinitesimal kleinen Reflexionsflächen ist es aber günstig, wenn diese auf jeder Zylinderlinse ein regelmäßiges Muster aufweist. Solche Muster können beispielsweise einen Sinus-, Dreieck- oder Sägezahnverlauf der einzelnen Reflexionsflächen haben. Die Reproduzierbarkeit der Reliefstruktur wird dadurch sehr einfach. Auch kann mathematisch bestimmt werden, welche Reliefstruktur bezüglich ihrer Antireflexwirkung für den jeweiligen Anwendungsfall optimal ist. Beispielsweise kann bei Dreieck- oder Sägezahnverlauf durch die Bestimmung des Flankenverlaufs der Reflexionsflächen der Hauptanteil des Störlichts in Regionen ober- oder unterhalb des normalen Wahrnehmungsbereichs des Betrachters gelenkt werden.

Besonders günstig ist es, wenn das vertikal verlaufende Muster der Reliefstruktur unregelmäßig ist. Die Streuwirkung der Reliefstruktur auf jeder einzelnen Zylinderlinse ist bei einem unregelmäßigen Muster, d.h. bei einem Muster mit Anordnung der kleinen Reflexionsflächen ohne Periodizität, besonders gut, weil dadurch auch bezüglich der Bildinhalte horizontal verlaufende Hell-/Dunkelbänder vermieden werden. Die oben erwähnte Bedingung der Tangentialpunkte muß natürlich auch bei einem unregelmäßigen Muster eingehalten sein. Ein solches Muster kann zufällig entstanden sein, es kann aber auch eine Zusammensetzung aus den oben erwähnten regelmäßigen Mustern sein. Weiterhin kann das unregelmäßige Muster auf jeder Zylinderlinse anders ausgebildet sein.

Von maßgeblicher Bedeutung für die Antireflexwirkung ist das Merkmal mit eigener erfindungswesentlicher Bedeutung, das sich auf den Versatz der Reflexionsflächen im Muster der Reliefstruktur zwischen benachbarten Zylinderlinsen bezieht. Die Reliefstruktur ist somit horizontal über alle Zylinderlinsen in einem unregelmäßigen Muster ausgebildet. Durch diese Maßnahme, die beabsichtigt oder zufällig durchgeführt werden kann, wird eine optimale Aufweitung und Verteilung des Störlichtbandes über den gesamten Linsenrasterschirm erreicht. Für den Betrachter werden störende "Komplett-Verschiebungen" des aufgeweiteten Störlichtbandes in den oberen oder unteren Teil des Schirms durch die Vermeidung eines horizontal alle Zylinderlinsen übergreifenden, regelmäßigen Musters der Reliefstruktur ausgeschlossen. Der Versatz der vertikalen Reliefstruktur zwischen benachbarten Zylinderlinsen kann um einen vorgegebenen, konstanten oder jeweils um einen zufälligen Betrag erfolgen. Optimal für die Antireflexwirkung erfindungsgemäßer Linsenrasterschirme ist eine Reliefstruktur, die vertikal und horizontal über alle Zylinderlinsen ein unregelmäßiges, ein zufälliges Muster aufweist.

Gemäß einer, einen anderen Parameter betreffenden Ausgestaltung des Erfindungsgegenstandes ist es vorteilhaft, wenn die Pitchbreite P der Zylinderlinsen symmetrisch von der Mitte des Linsenrasterschirms zu dessen beiden vertikalen Seitenrändern hin abnimmt. Mit dieser Maßnahme wird eine strahlenoptische Korrektur des Wiedergabebildes durchgeführt, die besonders die Bildqualität in den seitlichen Randzonen oder bei mehrfeldiger Panoramagrammdarstellung in den äußeren Panoramagrammfeldern deutlich verbessert. Die Selektivität des Linsenrasterschirms wird dadurch wesentlich erhöht. Mittels der Pitchbreitenkorrektur kann die Richtung des reflektierten Strahlenbündels jeder einzelnen Zylinderlinse kontrolliert werden. Ziel ist es dabei, die Strahlenbündel so zu lenken, daß sie sich für ausgewählte Panoramagrammfelder jeweils in einem Punkt schneiden. Die Abweichungen durch Streuung, die die Selektivität vermindern, sind weitgehend eliminiert. Bei besonders vielen nebeneinanderliegenden Panoramagrammfeldern kann auf Grund einer feldbezogenen Berechnung der Pitchbreitenkorrektur eine gleichermaßen optimale Selektivitätsverbesserung über den gesamten Wiedergabebereich nicht erreicht werden. In diesem Fall ist dann je nach den jeweiligen Anforderungen für den Betrachter, der sich bewegen oder sitzen kann, festzulegen, welche Panoramagrammfelder in ihrer Wiedergabequalität optimiert werden sollen. Hierbei handelt es sich meist um das zentrale Feld und die ihm benachbarten Felder.

Eine Pitchbreitenveränderung mit abnehmendem Maß zum vertikalen Bildschirmrand hin wird zwar auch in der bereits eingangs genannten EP-A-0 404 289 beschrieben. Hierbei handelt es sich jedoch um eine Anpassung der Pitchbreite eines Linsenrasters für einen flachen, hinter einem transparenten Linsenrasterschirm befindlichen Bildschirm, dessen Bild mit vorgegebenem konstantem Pixelrastermaß stereoskopisch wiedergeben wird. Befindet sich ein derart gerastertes Bild, welches Rasterstreifen mit konstanter Breite in paarweiser Zuordnung zur Herstellung der Raumtiefe aufweist, hinter einem Linsenraster, so wird für den Betrachter der Einblickwinkel auf die seitlichen Rasterstreifen immer spitzer. Diese zunehmend spitzen Winkel müssen zwangsläufig die Pitchbreiten der jeweiligen Zylinderlinse beeinflussen, um ein Übersprechen der dargestellten Bildperspektiven in den Randbereichen des flachen Bildschirms zu verhindern. Ein Ergebnis der Pitchbreitenanpassung ist natürlich auch eine gewisse strahlenoptische Korrektur der Bildwiedergabe. Bei der Pitchbreitenveränderung gemäß der oben genannten EP-A-0 404 289 wird das Ziel verfolgt, bei konstantem Pixelrastermaß die stereoskopische Betrachtung des gesamten Wiedergabebildes und nicht nur in Teilbereichen zu ermöglichen. Dies besonders im Hinblick darauf, daß der vorgeschlagene flache Bildschirm mit vorgesetztem Linsenrasterschirm als Arbeitsplatzgerät bei Bürotätigkeiten einsetzbar ist.

Nach einer, einen weiteren Parameter betreffenden vorteilhaften Ausgestaltung erfindungsgemäßer Linsenrasterschirme nimmt die Schirmdicke T symmetrisch von der Mitte des Linsenrasterschirms zu dessen beiden vertikalen Seitenrändern hin zu. Eine derartige konkave Krümmung der Vorderfläche des Schirms ist besonders günstig für den Einsatz bei einem flachen Bildschirm mit vorgesetztem Linsenraster, wie er weiter oben im Zusammenhang mit der EP-A-0 404 289 erwähnt wird. Trotz der vorgegebenen Planarität des Bildschirms besteht dadurch die Möglichkeit, die Vorderfläche des Linsenrasterschirmes so zu krümmen, daß eine strahlengeometrische Richtungslenkung der transmittierten Strahlen auf den Betrachter hin zur Erzeugung perspektivischen Sehens erfolgen kann. Eine derartige Schirmverdickung findet ihre Grenzen in der akzeptablen Beeinträchtigung der Fokussierung.

Nimmt gemäß dem Voranstehenden bei einem Linsenrasterschirm die Pitchbreite P zu den vertikalen Rändern hin ab und die Schirmdicke T zu, ist es gemäß einer weiteren Ausgestaltung der Erfindung vorteilhaft, wenn der Krümmungsradius K der Zylinderlinsen symmetrisch von der Mitte des Linsenrasterschirms zu dessen beiden vertikalen Seitenrändern hin zunimmt. Dadurch wird die Wiedergabequalität des erfindungsgemäßen Linsenrasterschirms auch in den seitlichen Randbereichen optimal korrigiert und verbessert.

Nach einer anderen Ausgestaltung erfindungsgemäßer Linsenrasterschirme kann vorteilhaft die Schirmdicke T auch konstant sein. Dadurch ist die Lage der Abbildungsebene, also die Lage der Reflexionsschicht auf der Rückseite des Linsenrasterschirms, bezüglich der Lage des Zylinderlinsenrasters auf der Vorderseite konstant. Eine Zunahme der Aufweitung eines Strahlenbündels an den vertikalen Rändern eines Linsenrasterschirms mit zunehmender Dicke und damit eine Verschlechterung der Selektivität ist so vermieden. Außerdem ist ein planparalleles Plattenmaterial für den Linsenrasterschirm fertigungstechnisch gut beherrschbar und meßtechnisch einfach kontrollierbar.

Ein weiteres Kriterium für die Einsatzmöglichkeiten der Erfindung und ihrer Ausgestaltungsformen ist die Größe eines derartigen Linsenrasterschirms; dieser kann vorzugsweise als Projektionsschirm zur Großbildprojektion eine große Bilddiagonale aufweisen. Für derart große Projektionsschirme (Bilddiagonale im Meterbereich) ist die Anwendung der erfindungsgemäß vorgesehenen Reliefstruktur mit Pitchbreitenkorrektur bei konstanter Schirmdicke besonders vorteilhaft. Bei dem mit der Erzeugung mehrerer Perspektiven verbundenen Einsatz vieler Projektoren tritt ohne weitere Maßnahmen ein Störlichtband besonders signifikant auf. Außerdem nimmt bei Großbildprojektionen die Selektivität in den äußeren Panoramafeldern ab. Dies läßt sich einfach durch die Pitchbreitenkorrektur verbessern. Übersprechen durch Strahlenbündelaufweitung auf Grund zunehmender Schirmdicke wird unterdrückt.

Weiterhin können Ausführungsformen der Erfindung vorteilhaft so ausgestaltet sein, daß der Linsenrasterschirm mindestens einfach geteilt ist. Derartige Teilungen in zwei oder mehrere Teile sind besonders bei großflächigen Projektionsschirmen angebracht. Die Herstellung der einzelnen Platten und der Transport werden dadurch wesentlich erleichtert. Eine Montage der einzelnen Platten kann beispielsweise durch punktuelle Verklebung der Platten mit einer stabilen Unterlage erfolgen. Die erforderliche Krümmung des Linsenrasterschirms wird beispielsweise mit einem Spannrahmen hergestellt.

Von wesentlicher Bedeutung für derartige Ausführungsformen der Erfindung ist es, aus wirtschaftlichen und fertigungstechnischen Gründen Teilungen so vorzunehmen, daß einzelne Teile identisch und damit gegeneinander austauschbar sind. Teilungen sollten deshalb auf eine größtmögliche Anzahl gleichartiger Teile ausgerichtet sein. Das kann in besonders günstiger Weise erreicht werden, indem Teilungsnähte horizontal und/oder vertikal über den Linsenrasterschirm symmetrisch zueinander angeordnet sind. Sind die einzelnen Zylinderlinsen unterschiedlich in ihrer Breite aufgrund einer durchgeführten Pitchbreitenkorrektur, ist dies bei der Teilung zu beachten. Gegebenenfalls kann es zur Erzielung vieler gleichartiger Teile zweckmäßig sein, die Pitchbreitenkorrektur intervallartig durchzuführen, d.h. die Pitchbreite immer über einige Zylinderlinsen konstant zu lassen.

Linsenrasterschirme nach der Erfindung weisen, wie bereits erläutert, die Reliefstruktur auf der Oberfläche der Zylinderlinsen zur Vermeidung von Störlichtreflexen auf. Die Ausmaße der Reliefstruktur bewegen sich dabei im Mikrometer-Bereich. Die Herstellung ist mit einer entsprechenden Genauigkeit durchzuführen, beispielsweise so, daß eine Matrize mittels eines Schneidstichels mit einem, einer vorgegebenen Eintauchtiefe überlagerten wechselnden Stichelhub in benachbarten, sich mit ihren Rändern überlappenden Bahnen geschnitten und zur Abformung des Linsenrasterschirms eingesetzt wird. Das Prinzip einer Abformung von einer Matrize ist allgemein bekannt (siehe beispielsweise die weiter oben genannte DE-A- 22 60 985) und ermöglicht die Herstellung von nahezu beliebig feinen Strukturen. Besonders bei relativ komplizierten Strukturen im Mikrometer-Bereich ist es von Vorteil, daß eine mehrfache Abformumg jedes herzustellenden Linsenrasterschirms von einer Matrize weniger aufwendig ist, als die direkte Bearbeitung eines jeden einzelnen Schirms. Im weitesten Sinne soll bei der Matrizenabformung auch die Abformung von einer Walze verstanden werden, da hierbei nur eine kinematische Umkehr zwischen Werkstück und Werkzeug erfolgt. Damit zählen zu der genannten Art der Abformung das Herstellen durch Walzen, Pressen oder Lackabformen mit einer Matrize. Für eine Lackabformung ist eine für aushärtende Bestrahlung transparente Matrize zweckmäßig. Eine grundsätzlich andere Methode einer Abformung stellt beispielsweise das Photoätzen dar; auch auf solche Weise lassen sich gemäß der Erfindung ausgebildete Linsenrasterschirme herstellen.

Im folgenden werden an Hand der Figuren der erfindungsgemäße Linsenrasterschirm und dessen bevorzugte Ausführungsformen näher erläutert. Die Darstellungen in den Figuren sind schematisch und teilweise stark vergrößert.

Es zeigen dabei die
- Figur 1 :: eine Großbild-Projektionseinrichtung mit Linsenrasterschirm;
- Figur 2 :: einen stark vergrößerten Ausschnitt des Schirms zur Darstellung der Reliefstruktur;
- Figur 3,4,5 :: bevorzugte Reliefstrukturen auf den Zylinderlinsen;
- Figur 6 :: eine Projektionseinrichtung mit pitchbreiten-korrigiertem Linsenrasterschirm;
- Figur 7,8,9,10:: bevorzugte Teilungen des Linsenrasterschirms;
- Figur 11,12,13:: einzelne Schritte eines Herstellungsverfahrens für den Linsenrasterschirm.

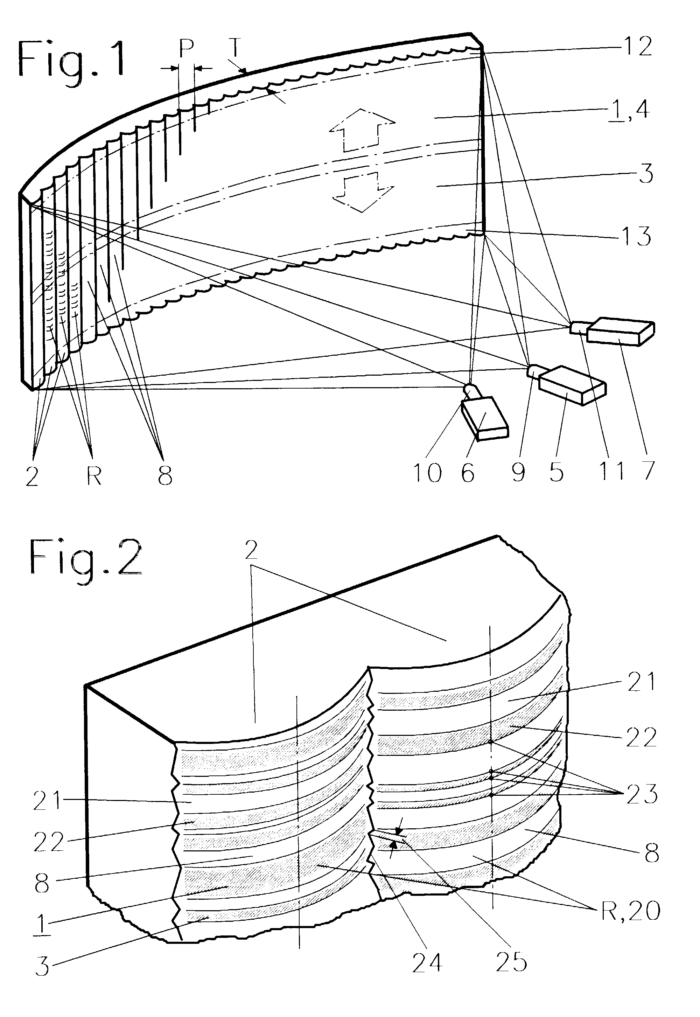

Die Figur 1 zeigt einen Linsenrasterschirm 1 mit einer Schirmdicke T und vertikal verlaufenden Zylinderlinsen 2 einer Pitchbreite P auf seiner Vorderseite 3. Die Zylinderlinsen 2 sind der besseren Übersicht wegen nur teilweise dargestellt. Der Linsenrasterschirm 1 ist im gewählten Ausführungsbeispiel ein Projektionschirm 4 mit einer großen Bilddiagonalen im Meterbereich. Auf diesem werden mittels Projektoren 5,6,7 Parallax-Panoramagramme für eine autostereoskopische Bildwahrnehmung erzeugt.

Die Zylinderlinsen 2 weisen auf ihrer Oberfläche 8 eine vertikal orientierte Reliefstruktur R auf. Da die Darstellung des Linsenrasterschirms 1 stark verkleinert ist, ist eine genaue Ausbildung der Reliefstruktur R der Figur 1 nicht zu entnehmen. Deren Beschreibung ist den nachfolgenden Figuren zu entnehmen. Die Wirkung der Reliefstruktur R ist jedoch in Figur 1 deutlich zu erkennen. Diese liegt darin, daß sie Störlichtreflexe weitgehend vermeidet, weshalb man auch von einer "Antireflexstruktur" sprechen kann. Im dargestellten Ausführungsbeispiel würden ohne die Reliefstruktur R die leuchtenden Austrittspupillen von Objektiven 9,10,11 der Projektoren 5,6,7 als feine vertikale Striche auf der Oberfläche 8 jeder Zylinderlinse 2 abgebildet werden. Die Summe aller Striche würde dem Betrachter als ein horizontales Störlichtband erscheinen - in der Figur 1 gestrichelt angedeutet. Die Reliefstruktur R auf der Oberfläche 8 aller Zylinderlinsen 2 weitet das Störlichtband jedoch in Richtung eines oberen Randes 12 und eines unteren Randes 13 des Linsenrasterschirms 1 auf - in der Figur 1 durch Pfeile und Strichelung angedeutet. Dabei erfolgt die Aufweitung auf Grund der Ausbildung der Reliefstruktur R durch gerichtete Reflexion des Störlichts und Aufspaltung in sehr kleine Lichtpunkte. Durch die Verteilung des Störlichtbandes optimal über den gesamten Linsenrasterschirm 1 weist dieses nur noch eine sehr geringe, vom Betrachter kaum noch wahrnehmbare Lichtintensität auf. Mit der Reliefstruktur R werden auch alle anderen Störlichtreflexe, die beispielsweise durch weitere Lichtquellen im Betrachterraum erzeugt werden, unterdrückt.

Die Figur 2 zeigt einen stark vergrößerten Ausschnitt des Linsenrasterschirms 1. Die Reliefstruktur R auf der Oberfläche 8 jeder Zylinderlinse 2 weist im dargestellten Ausführungsbeispiel ein unregelmäßiges Muster 20 auf. Dieses unregelmäßige Muster 20 besteht aus einem ständigen, unperiodischen Wechsel von ansteigenden Flanken 21 und abfallenden Flanken 22 (infinitesimal kleine Reflexionsflächen). Durch diese Ausbildung ist die Bedingung erfüllt, daß die Reliefstruktur R nur Tangentialpunkte 23 zur Vorderseite 3 des Linsenrasterschirms 1 aufweisen soll. Dadurch wird eine sehr gute Streuung des Störlichts vom Betrachter weg und Minimierung des direkt reflektierten Störlicht-Restanteils an den Tangentialpunkten 23 gewährleistet. Weiterhin ist das unregelmäßige Muster 20 auch horizontal über alle Zylinderlinsen 2 unregelmäßig, d.h. an Begrenzungslinien 24 zwischen den Zylinderlinsen 2 treten Versätze 25 im unregelmäßigen Muster 20 auf. Durch diese Maßnahme ist die Antireflexwirkung des Linsenrasterschirms 1 mit der Reliefstruktur R optimal, da jede Zylinderlinse 2 das Störlichtband unterschiedlich aufweitet.

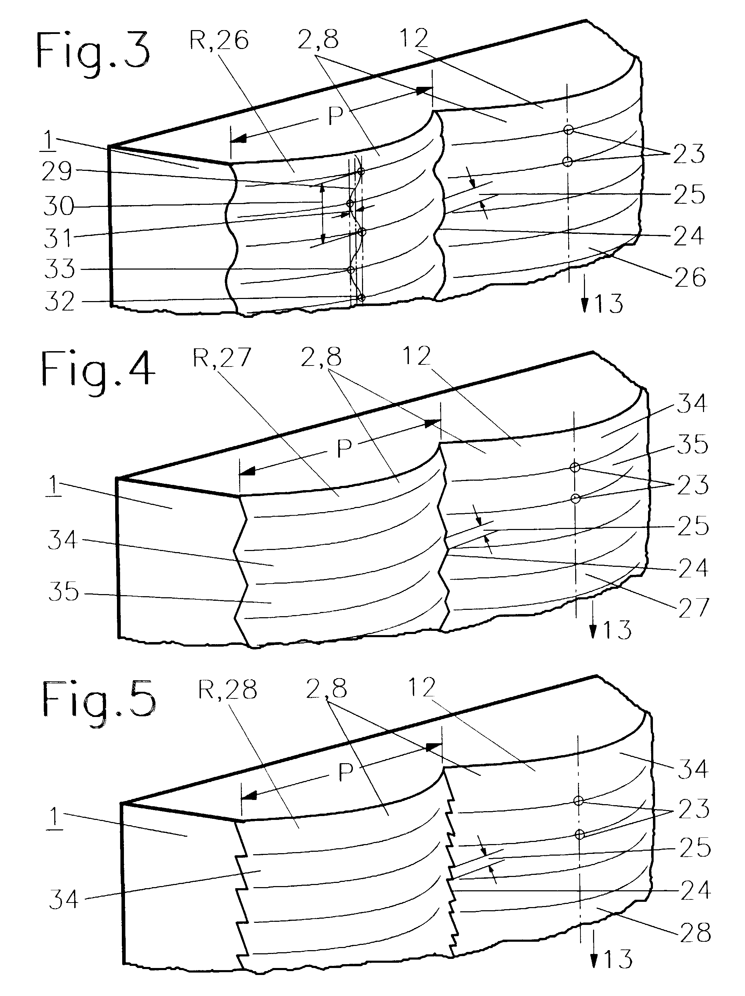

Herstellungstechnisch ist die Reliefstruktur R mit vertikal unregelmäßigem Muster 20 relativ aufwendig. Deshalb sind in den Figuren 3,4 und 5 regelmäßige Muster 26,27,28 dargestellt, die auch die Bedingung der Tangentialpunkte 23 erfüllen, aber durch ihre Periodizität leichter herstellbar sind. Benachbarte Zylinderlinsen 2 sollten unbedingt versetzte oder abweichende Periodizitäten aufweisen.

Die Figur 3 zeigt als Reliefstruktur R ein regelmäßiges Sinus-Muster 26 auf der Oberfläche 8 der Zylinderlinsen 2. Eine Sinusüberlagerung 29 hat im Ausführungsbeispiel eine Wellenlänge 30 von 1 mm und eine Amplitude 31 von 2,26 µm.

Daraus errechnet sich ein Reflexionsverhältnis zwischen der doppelten Amplitude 31 als Ausschlagbereich der Sinusüberlagerung 29 und der Wellenlänge 30 von 0,45 %. Dabei ist das Reflexionsverhältnis das Maß für das Reststörlicht, welches an den Tangentialpunkten 23, die bei dem Sinus-Muster 26 auf Sinusscheiteln 32 und Sinustälern 33 auf der Oberfläche 8 der Zylinderlinsen 2 liegen, in einzelne Lichtpunkte mit beispielsweise 2,26 µm Durchmesser aufgespalten und direkt zum Betrachter reflektiert wird. Ersichtlich handelt es sich um einen sehr kleinen Wert gegenüber dem Wert 100% der Störlichtintensität des Lichtbandes ohne Antireflexstruktur. Die sehr gute Wirkung der "Antireflexstruktur" ist damit auch zahlenmäßig belegt. Das angegebene Zahlenbeispiel bezieht sich auf eine Projektionseinrichtung gemäß Figur 1 mit einer Projektionsentfernung von 3500 mm und einem Objektivdurchmesser von 25 mm. Die gewählte Amplitude 31 von 40 µm führt zu unwesentlichen Beeinträchtigungen der Pitchbreite P der Zylinderlinsen 2. Weiterhin ist der Figur 3 der vertikale Versatz 25 an den Begrenzunglinien 24 der Zylinderlinsen 2 zu erkennen, der zu einem horizontal unregelmäßigen Muster führt. Bei dem Sinus-Muster 26 ist der Versatz 25 leicht durch eine Verschiebung der Sinusüberlagerung 29 auf jeder Zylinderlinse 2 zu erreichen.

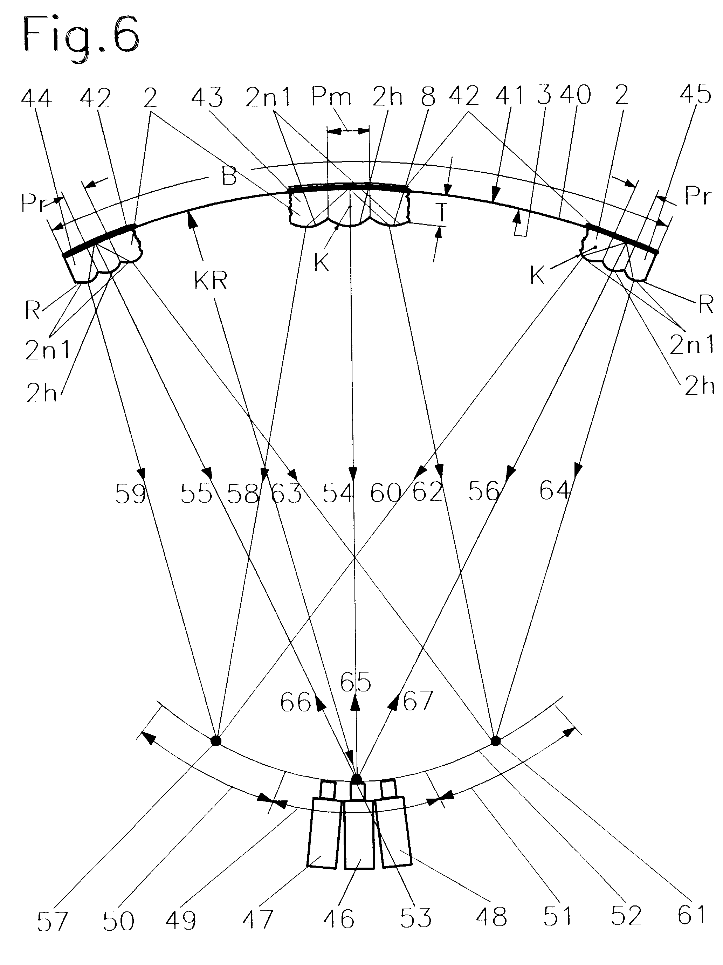

In der Figur 4 ist ein regelmäßiges Dreieck-Muster 27 dargestellt. Bei einem Muster mit geradlinigen Flanken ist die gerichtete Reflexion stärker als bei einem Muster mit gekrümmtem Verlauf, wie beipielsweise dem voran beschriebenen Sinus-Muster 26. Das Dreieck-Muster 27 weist flach ansteigende und abfallende Flanken 34,35 auf. Dadurch wird das Störlicht in Richtung zum oberen und unteren Rand 12,13 des Linsenrasterschirms 1 aufgefächert, und damit aus dem Wahrnehmungsbereich des Betrachters abgelenkt. Der Versatz 25 ist im Ausführungsbeispiel gleichmäßig. Die Figur 5 zeigt dagegen ein Sägezahn-Muster 28, das das Störlicht mit einer sehr langen, flach ansteigenden Flanke 34 in nur eine Richtung, im Ausführungsbeispiel in Richtung des oberen Randes 12 reflektiert. Das Sägezahn-Muster 28 auf jeder Zylinderlinse 2 bildet eine Reliefstruktur R mit "Dachziegelcharakter". Ansonsten gelten auch für die Muster 27,28 die bisher ausgeführten allgemeinen Erläuterungen.

Welches Muster 20,26,27 oder 28 auf dem Linsenrasterschirm 1 ausgeführt wird, hängt von den jeweiligen Randbedigungen ab. Diese werden u.a. bestimmt durch die Art und Anforderungen der Bildwiedergabe, durch die zu vermindernden Störlichtreflexe auf dem Linsenrasterschirm 1 und die Anforderungen durch den oder die Betrachter in sitzender, stehender oder bewegter Position.

In der Figur 6 ist eine Projektionseinrichtung mit einem pitchbreiten-korrigierten Linsenrasterschirm 40 dargestellt. Der Linsenrasterschirm 40 weist als Projektionsschirm zur Großbildprojektion eine große Bilddiagonale (Meterbereich) auf, er hat die Schirmdicke T und eine Bildschirmbreite B. Weiterhin ist er mit einem Krümmungsradius KR gekrümmt, der dem Projektions- bzw. Betrachtungsabstand entspricht. Der Linsenrasterschirm 40 ist auf seiner Rückseite 41 mit einer Reflexionsschicht 42 versehen, die beispielsweise eine Keulen-Charakteristik aufweist. Auf seiner Vorderseite 3 sind die Zylinderlinsen 2 mit der Reliefstruktur R der besseren Übersicht halber nur bereichsweise angedeutet. In einem Mittenbereich 43 des Linsenrasterschirms 40 sind Zylinderlinsen 2h und 2n1 mit einer Pitchbreite Pm, in beiden Randbereichen 44,45 sind Zylinderlinsen 2h und 2n1 mit einer Pitchbreite Pr dargestellt. Bei den Zylinderlinsen 2h handelt es sich um Hauptlinsen, bei den Zylinderlinsen 2n1 um erste Nebenlinsen. Diesen benachbart folgen je nach Anzahl der zu erzeugenden Panoramagrammfelder weitere, nicht dargestellte Nebenlinsen. Die Bildprojektion erfolgt im dargestellten Ausführungsbeispiel über einen zentral angeordneten Projektor 46 und zwei jeweils daneben befindliche Projektoren 47,48. Je nach Anzahl der zu projizierenden Perspektiven ist die Zahl der Projektoren jedoch veränderlich. In Figur 6 sind eine Mittenzone 49 und zwei Randzonen 50,51, also drei Panoramagrammfelder dargestellt. Die Anordnung der Projektoren 46,47,48 erfolgt entlang eines Kreisbogens 52, der auch die geometrische Verbindung aller Schnittpunkte der reflektierten Linsenstrahlen ist (optische Bildfeldkrümmung). Der Radius des Kreisbogens 52 entspricht ungefähr dem halben Projektions- bzw. Betrachtungsabstand. Ein Schnittpunkt 53 wird von allen Hauptlinsenstrahlen 54,55,56 gebildet, ein Schnittpunkt 57 von allen ersten linken Nebenlinsenstrahlen 58,59,60 und ein Schnittpunkt 61 von allen ersten rechten Nebenlinsenstrahlen 62,63,64. Der Übersichtlichkeit wegen sind in der Figur 6 nur Lichtstrahlen 65,66,67 des zentralen Projektors 46 dargestellt. Diese unterscheiden sich von den Hauptlinsenstrahlen 54,55,56 nur durch ihre Orientierung.

Bei der Korrektur der Pitchbreite P der Zylinderlinsen 2 für eine Selektivitätsverbesserung ist die Grundforderung zu stellen, daß im Zentrum der Mittenzone 49 und beispielsweise in den benachbarten Randzonen 50,51 sich die zentralen Strahlen jedes Strahlbündels der Hauptlinsen 2h und der ersten Nebenlinsen 2n1 in jeweils einem Punkt schneiden. D.h. alle von dem zentralen Projektor 46 ausgesendeten Lichtstrahlen 65,66,67 werden direkt durch die Hauptlinsen 2h in die Mittenzone 49 reflektiert; alle aus den unmittelbaren Nebenlinsen 2n1 austretenden Nebenlinsenstrahlen 58 bis 64 werden in die inneren Randzonen 50,51 reflektiert. Ist diese Forderung erfüllt, kommen auch alle von den benachbarten Projektoren 47,48 ausgesendeten und reflektierten Lichtstrahlen in Schnittpunkten auf dem Kreisbogen 52 zur Deckung (in Figur 6 nicht dargestellt). Sollen besonders viele nebeneinanderliegende Panoramagrammfelder genutzt werden, so kann es vorteilhaft sein, die Grundforderung zwar auf die Mittenzone 49, nicht aber auf die benachbarten Randzonen 50,51, sondern auf übernächste Randzonen und damit auf zweite Nebenlinsen zu beziehen. Ein solcher Bezug hängt von den jeweiligen Bedingungen an die Wiedergabequalität in bestimmten Panoramagrammfeldern ab.

Praktisch erfüllt wird die oben formulierte Forderung durch die Veränderung der Pitchbreite P der Zylinderlinsen 2 und zwar durch zu den Randbereichen 44,45 des Linsenrasterschirms 40 hin symmetrisch abnehmende Pitchbreite P. Damit ergibt sich im Mittenbereich 43 eine Pitchbreite Pm, die um einen geringen Betrag größer ist als die Pitchbreite Pr in den Randbereichen 44,45. Durch die Zylinderlinsen 2 mit der geringeren Pitchbreite Pr wird eine geringe Drehung der reflektierten Linsenstrahlen 58 bis 64 in Richtung der Mittenzone 49 bewirkt, so daß die ohne Pitchbreiten-Korrektur in den Randzonen 50,51 gestreuten Strahlen in den Schnittpunkten 57 und 61 zur Deckung kommen. Mit der Korrektur der Pitchbreite P wird deshalb bei dem gewählten Ausführungsbeipiel in Figur 6 eine deutliche Verbesserung der Bildqualität in den Randbereichen 44,45 bewirkt. Bei dieser Art der Selektivitätsverbesserung wirkt sich eine konstante Schirmdicke T unterstützend aus, da so keine unterschiedliche Aufweitung der einzelnen Linsenstrahlbündel auf Grund eines unterschiedlichen Abstandes der Reflexionsschicht 42 zu der Oberfläche 8 der Zylinderlinsen 2 hervorgerufen wird.

Zahlenmäßig sieht eine Korrektur der Pitchbreite P mit den angegebenen Parametern folgendermaßen aus (die zahlenmäßig gewählten Parameter sind andere als die in der Figur 6 dargestellten, jede andere zahlenmäßige, technisch realisierbare Wahl ist möglich) :

| | |
|---|---|
| Projektoranzahl | 18 |
| Objektivdurchmesser | 25 mm |
| Bildschirmbreite B | 2000 mm |
| Projektions-/Betrachtungsabstand KR | 3500 mm |
| Schirmdicke T | 6,491 mm |
| Brechungsindex des Linsenrasterschirm-Materials | 1,495 |
| Zylinderlinsenradius | 2,158 mm |
| Innerste Pitchbreite Pm | 0,656 mm |
| Äußerste Pitchbreite Pr | 0,630 mm |
| Pitchbreitenabnahme | 0,026 mm |

Ist bei anderen Einsatzfällen eine Veränderung von Pitchbreite P und Schirmdicke T erforderlich, kann die Selektivität wiederum gesteigert werden durch eine Veränderung des Krümmungsradius K der Zylinderlinsen 2 in der Form, daß dieser zu den Randbereichen 44,45 hin zunimmt.

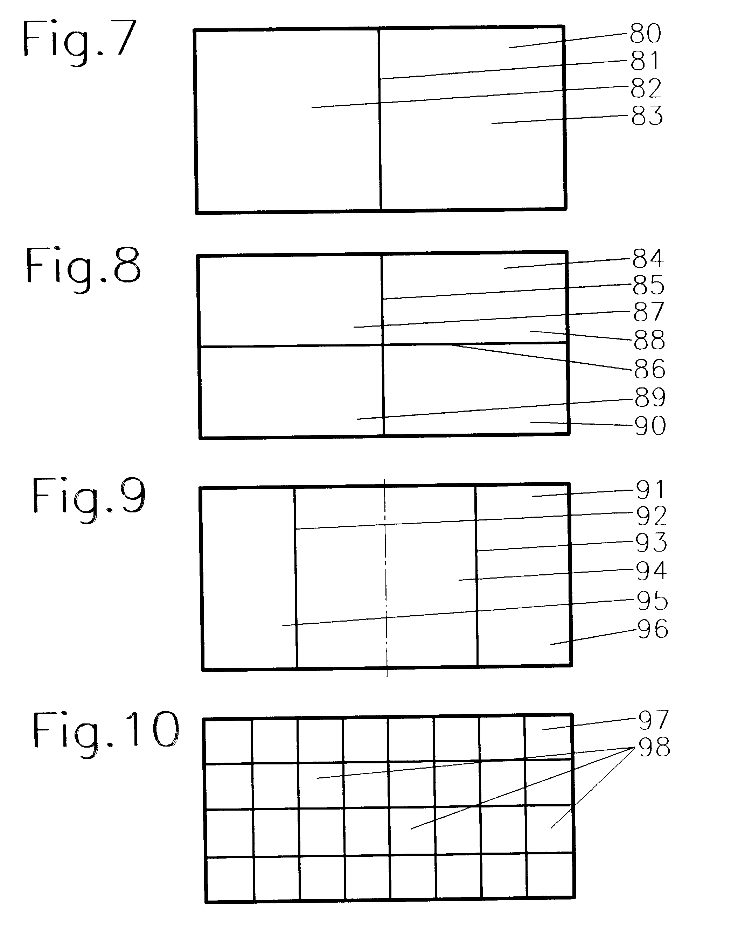

Ein anderes Problem, das besonders dann auftritt, wenn der Linsenrasterschirm als großflächiger Projektionsschirm ausgebildet ist, wird in den folgenden Figuren 7 bis 10 behandelt. Derartige Projektionsschirme sind in der Regel so groß, daß sie zur besseren Produzier- und Handhabbarkeit mindestens einmal geteilt sind. Die einzelnen Teile werden dann entsprechend miteinander verbunden.

In Figur 7 ist ein Projektionsschirm 80 ohne weitere Einzelheiten dargestellt, der vertikal entlang einer Mittenlinie 81 einfach geteilt ist. Er besteht daher aus zwei Hälften 82,83, die in ihrem Aufbau und in ihrer Struktur spiegelbildlich bezüglich der Mittenlinie 81 identisch sind. Die Mittenlinie 81 ist deckungsgleich mit der entstandenen Teilungsnaht.

Die Figur 8 zeigt einen Projektionsschirm 84, der zweifach symmetrisch geteilt ist, einmal entlang einer vertikalen Mittenlinie 85 und einmal entlang einer horizontalen Mittenlinie 86. Es entstehen vier Teile 87 bis 90, die wiederum spiegelbildlich bezüglich der Mittenlinien 85,86 identisch sind.

In Figur 9 ist ein Projektionsschirm 91 dargestellt, der zwar auch zweifach geteilt ist, aber entlang zweier vertikaler Linien 92,93. Diese Linien 92,93 sind mittensymmetrisch derart angeordnet, daß ein großes Mittelteil 94 und zwei schmale, spiegelbildlich identische Seitenteile 95,96 gebildet sind. Eine derartige Teilung ist beipielsweise dann sinnvoll, wenn der Projektionsschirm 91 pitchbreiten-korrigiert ist und die Korrekturmaße intervallweise zugeordnet sind. Das Mittelteil 94 kann eine konstante Pitchbreite P aufweisen und ist dementsprechend leicht herstellbar. Die Seitenteile 95,96 können identisch mit abnehmender Pitchbreite P ausgeführt sein und erfordern nur eine Herstellungsvorlage.

Figur 10 zeigt einen vertikal und horizontal vielfach geteilten Projektionsschirm 97. Es entsteht eine der Teilung entsprechende Anzahl von Schirmsegmenten 98. Je nach den Anforderungen an den Projektionsschirm 97 können diese beipielsweise alle identisch sein (konstante Parametrierung), sie können abschnittsweise zueinander identisch sein (intervallweise Parametrierung) oder sie können sich alle voneinander unterscheiden (segmentweise Parametrierung), was herstellungstechnisch jedoch aufwendig ist.

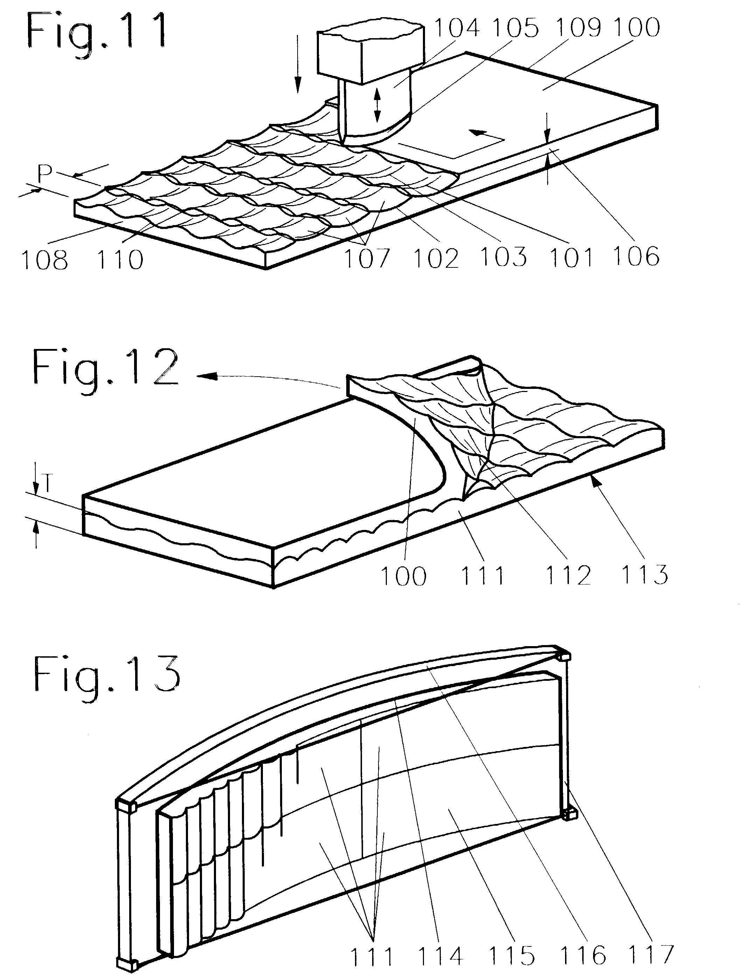

In den Figuren 11, 12 und 13 sind einzelne Verfahrensschritte, wie sie weitgehend auch der in der Beschreibungseinleitung schon genannten DE-A- 22 60 985 entnommen werden können, zur Herstellung des Linsenrasterschirms mit Reliefstruktur R dargestellt. Bei diesem Verfahren wird der Linsenrasterschirm von einer Matrize mit Negativstruktur abgeformt. Die Matrize kann die gesamte Oberflächenstruktur des Linsenrasterschirms aufweisen oder nur Teile davon zur Herstellung geteilter Schirme.

Die Figur 11 zeigt einen dem eigentlichen Herstellungsverfahren des Linsenrasterschirms vorgeordneten Schritt und zwar die Herstellung einer Matrize 100 selbst. Dabei wird eine erforderliche Negativstruktur 101, die sich aus einer negativen Zylinderlinsenstruktur 102 und einer negativen Reliefstruktur 103 zusammensetzt, mittels eines Schneidstichels 104 in die Matrize 100 geschnitten. Dieser Schneidstichel 104 weist an seinem Ende eine Halbrundschneide 105 auf (jede andere sinnvolle Form ist möglich). Die negative Zylinderlinsenstruktur 102 wird damit in der Weise erzeugt, daß der Schneidstichel 104 mit einer vorgegebenen Eintauchtiefe 106, welche zum völligen Freischneiden der Reliefstruktur R führen muß, in die Matrize 100 einfährt (Schneidhub) und benachbarte Bahnen 107 leicht überlappend, mit beipielsweise wechselnder Vorschubrichtung schneidet. Diese Bewegungsvorgänge sind in der Figur 11 durch entsprechende Pfeile angedeutet. Dabei muß bei Pitchbreitenkorrektur der Abstand zwischen zwei benachbarten Schneidbahnen 107 beispielsweise in Richtung beider Seitenränder 108,109 symmetrisch abnehmen, so daß auch bei konstanter Eintauchtiefe 106 die Pitchbreite P abnimmt.

Die negative Reliefstruktur 103 wird dadurch erzeugt, daß der Schneidstichel 1.04 während des Vorschubes für die einzelnen Bahnen 107 noch einen dem Schneidhub überlagerten wechselnden Stichelhub ausführt (in der Figur 11 angedeutet durch einen Doppelpfeil auf dem Schneidstichel 104). Die Frequenz und die Auslenkung dieses wechselnden Stichelhubes sind einzig bestimmend für die Ausbildung der zu erzeugenden Reliefstruktur 103 (siehe Erläuterungen zu den Figuren 2 bis 5). Sie können konstant sein oder sich von Bahn zu Bahn 107 ändern. Die Auslenkungen bewegen sich dabei im µm-Bereich. Durch die Überlappung der geschnittenen Bahnen 107 entstehen beim Schneiden Begrenzungslinien 110, die einen unregelmäßigen Verlauf haben. Mit der Art der Überlagerung des Zylinderlinsen- und des Reliefstruktur-Schneidens können in sehr einfacher Weise beliebige Negativstrukturen 101 für die Abformung des Linsenrasterschirms hergestellt werden.

Nach der oben beschriebenen Herstellung der Matrize 100 ist diese für die Abformung eines oder mehrerer Linsenrasterschirme oder Teile davon bereit. Meist wird die Matrize 100 mehrfach -so oft wie möglich- verwendet. In einem nächsten Verfahrensschritt, dem eigentlichen Abformungsvorgang (nicht dargestellt), wird die Matrize 100 mit einem Linsenmaterial, welches im allgemeinen ein optisch geeigneter Kunststoff ist, abgeformt. Nachdem das Linsenmaterial ausgehärtet ist, muß die Matrize 100 wieder abgenommen werden.

In der Figur 12 ist eine Möglichkeit der Trennung von der Matrize 100 und einem abgeformten Linsenrasterschirm 111 dargestellt. Ist die Matrize 100 flexibel, so läßt sie sich in einfacher Weise wie eine Folie von dem Linsenrasterschirm 111 abziehen (in Figur 12 durch einen Pfeil angedeutet). Der Linsenrasterschirm 111 kann derart spröde oder groß sein, daß er selbst nur schwer von der Matrize 100 zerstörungsfrei abgenommen werden kann. Geeignete Materialien für die flexible Matrize 100 sind Kunststoffe, aber auch weiche, federnde Metalle wie Kupfer oder Messing. Auf ihrer strukturierten Oberfläche 112 weist die Matrize 100 aus Messingblech noch eine Silberbeschichtung zur besseren Trennfähigkeit auf.

Der nächste Verfahrensschritt - nicht dargestellt - ist die Beschichtung der Rückseite 113 (Fig.12) des Linsenrasterschirms 111 mit einer Reflexionsschicht 114 (Fig.13). Im gewählten Ausführungsbeispiel ist der Linsenrasterschirm 111 nur ein Teil eines großen Projektionsschirms. Deshalb erfolgt noch eine Montage.

Die Figur 13 zeigt den fertig montierten Projektionsschirm 115. Er ist aus vier identischen Linsenrasterschirmen 111 zusammengesetzt, die durch Punktklebung auf einer biegsamen Unterlage 116 fixiert sind. Diese Unterlage 116 wird in einen Rahmen 117 derart eingespannt, daß der Projektionsschirm 115 die gewünschte Krümmung aufweist. Nach der Montage ist damit beipielsweise ein 3D-Großbildschirm fertiggestellt, der durch das Linsenraster mit Reliefstruktur und Pitchbreitenkorrektur ein komfortables Betrachten sehr informativer, autostereoskopischer Stand- oder Bewegtbilder mit einer besonders hohen Bildwiedergabequalität gewährleistet.

## Patentansprüche

1. Linsenrasterschirm (1; 40; 80; 84; 91; 97; 111) für autostereoskopische Bildwahrnehmung mit einer Schirmdicke (T) und vertikal verlaufenden Zylinderlinsen (2; 2h; 2n1) mit einem Krümmungsradius (K) und einer Pitchbreite (P) auf seiner Vorderseite (3),
**dadurch gekennzeichnet**, daß
die Zylinderlinsen auf ihrer Oberfläche (8) eine Reliefstruktur (R) aufweisen, bei der Reflexionsflächen (21, 22; 34, 35) mit Abmessungen, die auf eine Entfernung des Linsenrasterschirms von einem Betrachter im Betrachtungsabstand für autostereoskopische Bildwahrnehmung jenseits der Wahrnehmbarkeitsgrenze liegen nach einem vorgegebenen, vertikal verlaufenden Muster (20; 26; 27; 28) mit einem Versatz (25) zwischen benachbarten Zylinderlinsen, gegen die Achsen der Zylinderlinsen derart geneigt sind, daß eine Antireflexwirkung erzielt wird.

2. Linsenrasterschirm nach Anspruch 1,
**dadurch gekennzeichnet**, daß
die Pitchbreite (P) der Zylinderlinsen symmetrisch von der Mitte (Pm) des Linsenrasterschirms zu dessen beiden vertikalen Seitenrändern (Pr) hin abnimmt.

3. Linsenrasterschirm nach Anspruch 1 oder 2,
**dadurch gekennzeichnet**, daß
dessen Schirmdicke (T) symmetrisch von der Mitte des Linsenrasterschirms zu dessen beiden vertikalen Seitenrändern hin zunimmt.

4. Linsenrasterschirm nach den Ansprüchen 2 und 3,
**dadurch gekennzeichnet**, daß
der Krümmungsradius (K) der Zylinderlinsen symmetrisch von der Mitte des Linsenrasterschirms zu dessen beiden vertikalen Seitenrändern hin zunimmt.

5. Linsenrasterschirm nach Anspruch 2,
**dadurch gekennzeichnet**, daß
dessen Schirmdicke (T) konstant ist.

6. Linsenrasterschirm nach einem der Ansprüche 1 bis 5,
**dadurch gekennzeichnet**, daß
dieser als Projektionsschirm (80, 84, 91, 97, 115) zur Großbildprojektion eine große Bilddiagonale, etwa im Meterbereich, aufweist.

7. Linsenrasterschirm nach einem der Ansprüche 1 bis 6,
**dadurch gekennzeichnet**, daß
dieser mindestens einfach geteilt (82, 83; 87-90; 94-96; 98) ist.

8. Linsenrasterschirm nach Anspruch 7,
**dadurch gekennzeichnet**, daß
horizontale und/oder vertikale Teilungsnähte (81; 85, 86; 92, 93) über den Linsenrasterschirm (80, 84, 91, 97, 115) symmetrisch zueinander angeordnet sind.

## Claims

1. Lenticular screen (1;40;80;84;91;97;111) for the perception of autostereoscopic images, having a screen thickness (T) and vertically extending cylinder lenses (2;2h,2n1) with a radius of curvature (K) and a pitch width (P) on its front side (3), characterized in that the cylinder lenses have a relief structure (R) on their surface (8), in which relief structure reflection surfaces (21,22;34,35), according to a specified, vertically extending pattern (20;26;27;28), with a misalignment (25) between adjacent cylinder lenses, are inclined towards the axes of the cylinder lenses in such a way that an anti-reflecting effect is attained, the reflection surfaces having dimensions which, with a distance of the lenticular screen from an observer at an observation distance for the perception of autostereoscopic images, lie beyond the limit of perceptibility.

2. Lenticular screen according to claim 1, characterized in that the pitch width (P) of the cylinder lenses decreases symmetrically from the centre (Pm) of the lenticular screen towards its two vertical side edges (Pr).

3. Lenticular screen according to claim 1 or 2, characterized in that its screen thickness (T) increases symmetrically from the centre of the lenticular screen towards its two vertical side edges.

4. Lenticular screen according to claims 2 and 3, characterized in that the radius of curvature (K) of the cylinder lenses increases symmetrically from the centre of the lenticular screen towards its two vertical side edges.

5. Lenticular screen according to claim 2, characterized in that its screen thickness (T) is constant.

6. Lenticular screen according to one of claims 1 to 5, characterized in that as projection screen (80,84,91,97,115) it has for large-screen projection a large screen diagonal, approximately in the meter range.

7. Lenticular screen according to one of claims 1 to 6, characterized in that it is divided at least once (82,83;87-90;94-96;98).

8. Lenticular screen according to claim 7, characterized in that horizontal and/or vertical partition seams (81;85,86;92,93) are arranged symmetrically to each other across the lenticular screen (80,84,91,97,115).

## Revendications

1. Ecran lenticulaire (1, 40, 80, 24, 91, 97, 111) pour la perception d'images autostéréoscopiques, avec une épaisseur d'écran (T) et des lentilles cylindriques (2 ; 24, 241), développant un rayon de courbure (K) et une largeur de pas (P) sur sa face antérieure (3),
caractérisé en ce que
les lentilles cylindriques présentent sur leur surface (8) une structure en relief (R), dans laquelle les surfaces de réflexion (21, 22 ; 34, 35) sont inclinées par rapport aux axes des lentilles cylindriques, avec des dimensions qui se trouvent à une distance de l'écran lenticulaire par rapport à un observateur à la distance d'observation pour une perception d'image autostéréoscopique de l'autre côté de la limite de perceptibilité, selon un modèle prédéfini (20 ; 26, 27 ; 28) se développant verticalement, avec un décalage (25) entre les lentilles cylindriques voisines, d'une manière telle que l'on obtienne un effet antireflet.

2. Ecran lenticulaire selon la revendication 1
caractérisé en ce que
la largeur de pas (P) des lentilles cylindriques décroît de façon symétrique en partant du milieu (Pm) de l'écran lenticulaire vers ses deux bords verticaux latéraux (Pr).

3. Ecran lenticulaire selon la revendication 1 ou 2,
caractérisé en ce que
son épaisseur de lentille (T) croît de façon symétrique en allant du milieu de l'écran lenticulaire vers ses deux bords verticaux latéraux.

4. Ecran lenticulaire selon les revendications 2 et 3,
caractérisé en ce que
le rayon de courbure (K) des lentilles cylindriques croît de façon symétrique en partant du milieu de l'écran lenticulaire vers ses deux bords verticaux latéraux.

5. Ecran lenticulaire selon la revendication 2,
caractérisé en ce que
son épaisseur d'écran (T) est constante.

6. Ecran lenticulaire selon l'une des revendications 1 à 5,
caractérisé en ce que
celui-ci présente, comme écran de projection (80, 84, 91, 97, 115) pour la projection de grandes images une grande diagonale de l'image à peu près de l'ordre du mètre.

7. Ecran lenticulaire selon l'une des revendications 1 à 6,
caractérisé en ce que
celui-ci est partagé au moins simplement (22, 23 ; 87-90 94-96 ; 98)

8. Ecran lenticulaire selon la revendication 7,
caractérisé en ce que
des joints de partage horizontales et/ou verticales (81 ; 85, 86 ; 92, 93) sont disposés sur l'écran lenticulaire (80, 84, 91, 97, 115) de façon symétrique les unes par rapport aux autres.
